# EUROPÄISCHE PATENTANMELDUNG

(11) **EP 3 296 663 A1**
(43) Veröffentlichungstag der Anmeldung: **21.03.2018**
(21) Anmeldenummer: 16189014.0
(22) Anmeldetag: 15.09.2016
(51) Int. Cl.: F24J 2/52, F24J 2/54

(54) **VERFAHREN ZUR MONTAGE VON SOLARMODULEN AN EINER TRAGKONSTRUKTION**

(71) Anmelder: Habdank PV-Montagesysteme GmbH & Co. KG, 73037 Göppingen (DE)
(72) Erfinder: Habdank, Martin, 73092 Heiningen (DE)
(74) Vertreter: Ruckh, Rainer Gerhard

(57) **Zusammenfassung**

Die Erfindung betrifft ein Verfahren zur Montage von Solarmodulen (3) an einer Tragkonstruktion (2), wobei die Tragkonstruktion (2) eine ein- oder mehrreihige Anordnung von Pfosten (4) aufweist,
umfassend folgende Verfahrensschritte:
• Einbringen der Pfosten (4) in ein Erdreich, wobei die oberen Enden der Pfosten (4) oder dort gelagerte Rahmen (6) eine Montagefläche ausbilden
• darauffolgend Montage der Solarmodule (3) im Bereich der Montagefläche, so dass die Solarmodule (3) mit den Pfosten (4) der Tragkonstruktion (2) verbunden sind
• darauffolgend Einbringen der an den Pfosten (4) montierten Solarmodule (3) in eine von der Montagefläche verschiedene Arbeitsfläche.

## Beschreibung

Die Erfindung betrifft ein Verfahren zur Montage von Solarmodulen an einer Tragkonstruktion.

Derartige Tragkonstruktionen mit einer Mehrzahl von Solarmodulen, insbesondere Photovoltaikmodulen, bilden Solaranlagen, die insbesondere als Freilandanlagen ausgeführt sein können, bei welchen Pfosten in den Erdboden eingebracht, insbesondere eingerammt werden. Auf diesen Pfosten, welche typischerweise in einer Reihe oder mehreren Reihen angeordnet werden, werden Traganordnungen über Verbindungselemente befestigt. Darauf sind dann die Solarmodule montiert.

Typischerweise sind die Solarmodule an der Tragkonstruktion so befestigt, dass diese Solarmodule in einer zur Horizontalen geneigten Ebene liegen. Dadurch wird die Effizienz der Solaranlage optimiert, da die geneigten Positionen der Solarmodule so angepasst sind, dass die Sonneneinstrahlung auf diese möglichst groß ist.

Ein Nachteil derartiger Solaranlagen besteht darin, dass der Montageaufwand, insbesondere der Aufwand zur Anbringung der Solarmodule, unerwünscht hoch ist.

Dies liegt daran, dass durch die geneigten Positionen der Solarmodule deren obere Randbereiche soweit über der Bodenoberfläche, das heißt der Oberfläche des Erdreichs sind, dass Bedienpersonen, wenn sie auf der Bodenoberfläche stehen, diese oberen Randbereiche nicht erreichen können.

Um die Solarmodule an der Tragkonstruktion zu montieren, müssen daher Hilfskonstruktionen wie Hebebühnen, Podeste und dergleichen eingesetzt werden. All diese Hilfskonstruktionen müssen vor Ort an den Montageort gebracht werden und dann in den jeweiligen Arbeitspositionen, in welchen die Bedienperson Montagearbeiten verrichten muss, positioniert werden. Dieser Aufwand wird oftmals dadurch noch erhöht, wenn die Person in erhöhten Positionen auf einer Hebebühne oder einem Podest arbeitet, auch zusätzlich noch gesichert werden muss.

Aus der DE 20 2012 103 108 ist eine Tragkonstruktion für Solarmodule bekannt, welche eine Anordnung von auf einem Untergrund gelagerten Pfosten umfasst. An jedem Pfosten ist eine Trägereinheit schwenkbar gelagert, wobei die Trägereinheit zwei einen Querträger tragende Streben aufweist, deren dem Querträger abgewandte Enden in einer Schwenklagerung gelagert sind. Der Querträger ist mittels Führungsmitteln verschiebbar am Pfosten gelagert. An dem Querträger sind Aufnahmemittel zur Lagerung von Solarmodulen vorgesehen. Durch Einstellung und Fixierung einer Schwenkposition der Trägereinheit ist die Neigung der Solarmodule vorgegeben.

Bei dieser Tragkonstruktion kann die Neigung der Solarmodule nur derart variiert werden, dass die Solaranlage an unterschiedliche Applikationen angepasst werden kann. In den unterschiedlichen Neigungseinstellungen der Solarmodule verbleibt jedoch auch hier stets das Problem, dass diese bei der Montage nur mit Hilfsmitteln zugänglich sind, so dass auch in diesem Fall der Montageaufwand unerwünscht hoch ist.

Der Erfindung liegt die Aufgabe zugrunde, ein Verfahren bereitzustellen, mit welchem eine einfache, schnelle und rationelle Montage von Solarmodulen an einer Tragkonstruktion ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein Verfahren zur Montage von Solarmodulen an einer Tragkonstruktion, wobei die Tragkonstruktion eine ein- oder mehrreihige Anordnung von Pfosten aufweist,
umfassend folgende Verfahrensschritte:
   - Einbringen der Pfosten in ein Erdreich, wobei die oberen Enden der Pfosten oder dort gelagerte Rahmen eine Montagefläche ausbilden
   - darauffolgend Montage der Solarmodule im Bereich der Montagefläche, so dass die Solarmodule mit den Pfosten der Tragkonstruktion verbunden sind
   - darauffolgend Einbringen der an den Pfosten montierten Solarmodule in eine von der Montagefläche verschiedene Arbeitsfläche.

Der Grundgedanke der Erfindung besteht somit darin, die Pfosten der Tragkonstruktion und/oder die an den oberen Enden der Pfosten gelagerte Rahmen in einem ersten Verfahrensschritt in Montagepositionen zu bringen, in welchen die oberen Enden der Pfosten und/oder die an den Pfosten gelagerten Rahmen eine Montagefläche ausbilden, in welcher Bedienpersonen einfach und ohne Hilfsmittel wie Hebebühnen oder Podeste die Montage der Solarmodule an der Tragkonstruktion vornehmen können. Dies bedeutet, dass die jeweilige Bedienperson auf der Bodenoberfläche stehend einfach Zugang zur Montagefläche hat und dort bequem die Solarmodule montieren kann. Dadurch wird der Montageaufwand der Solaranlage erheblich reduziert.

Besonders vorteilhaft verläuft die Montagefläche in einer horizontalen Ebene, wobei insbesondere die Montagefläche in einer ergonomischen Arbeitshöhe oberhalb der Oberfläche des Erdreichs verläuft.

Die Montagefläche befindet sich somit in einer gleichförmigen Arbeitshöhe oberhalb der Bodenoberfläche des Erdreichs, in welches die Pfosten der Tragkonstruktion eingelassen sind. Eine Bedienperson hat somit von allen Seiten den gleich guten Zugang zur Montagefläche und kann dort einfach und schnell die Solarmodule montieren.

Die in den Montagepositionen der Pfosten und/oder der Rahmen durchgeführten Montagearbeiten können zusätzlich zur bloßen Montage der Solarmodule weitere Montageschritte umfassen.

Insbesondere kann im Bereich der Montagefläche eine Tischstruktur mit den Pfosten verbunden werden, wobei auf die Tischstruktur die Solarmodule montiert werden.

Weiter vorteilhaft werden zusätzlich zu den Solarmodulen diesen zugeordnete mechanische oder elektrische Komponenten montiert.

Gemäß einer vorteilhaften Ausgestaltung weist die Tragkonstruktion entlang der Reihen der Pfosten verlaufende Längsträger und quer hierzu verlaufende Modulträger auf.

In diesem Fall können als weitere Montagearbeiten die Anbringung der Modulträger alleine oder mit den Längsträgern als vorgefertigte Baueinheiten durchgeführt werden, wenn mit den Pfosten und/oder den Rahmen die Montagefläche bereitgestellt wird.

Nachdem die Montagearbeiten abgeschlossen sind und die Solarmodule insbesondere mit allen zugeordneten mechanischen und elektrischen Komponenten an den Pfosten beziehungsweise an den am Pfosten gelagerten Rahmen montiert sind, werden die Solarmodule als komplett montierte Einheit aus dem Bereich der Montagefläche in eine Arbeitsposition eingebracht, in welcher die Solarmodule in einer Arbeitsfläche orientiert sind, wobei vorteilhaft die Arbeitsfläche gegenüber der Montagefläche geneigt ist.

Dieser Vorgang kann einfach und rationell durchgeführt werden, da die gesamte Anordnung der Solarmodule als Einheit verfahren oder geschwenkt werden kann.

Dabei kann die Überführung der Solarmodule aus dem Bereich der Montagefläche in die Arbeitsfläche mechanisch oder mittels eines elektrischen, hydraulischen oder pneumatischen Stellsystems erfolgen.

Die Tragkonstruktion kann generell eine einreihige oder auch mehrreihige, bevorzugt zweireihige Anordnung von Pfosten aufweisen.

Bei einer einreihigen Pfostenanordnung ist an jedem Pfosten ein Rahmen gelagert, der in seiner Neigung am Pfosten einstellbar ist.

Bei dieser Variante können durch eine Verstellung der Neigung der Rahmen nach erfolgter Montage der Solarmodule diese aus dem Bereich der Montagefläche in die Arbeitsfläche geschwenkt werden. Dies stellt eine sehr einfache Möglichkeit der Überführung der Solarmodule in die durch die Arbeitsfläche definierte Arbeitsposition dar.

Vorteilhaft weist jeder Rahmen eine obere Strebe auf, wobei die Oberseiten der oberen Streben in einer Ebene verlaufen, wobei parallel zu dieser Ebene die Ebene der montierten Solarmodule verläuft.

Auf diesen oberen Streben werden vorteilhaft als Unterkonstruktion für die Solarmodule zuerst die Längsträger und darauf die Modulträger montiert. Diese können bereits als fertig montierte Einheiten auf den Streben montiert sein. Alternativ können die Modulträger allein oder mit den Längsträgern als vormontierte Einheit auf den Streben montiert werden, wenn sich diese im Bereich der Montagefläche befinden.

Gemäß einer vorteilhaften Ausgestaltung weist jeder Rahmen eine vordere und hintere Strebe auf, wobei die vordere und hintere Strebe mit einem längsseitigen Ende an der Unterseite der oberen Strebe gelagert sind, wobei zwischen diesen Lagerungen der Pfosten verläuft. Die zweiten längsseitigen Enden der vorderen und hinteren Strebe sind durch ein Befestigungsmittel aneinander befestigt und am Pfosten gelagert.

Die Rahmen bilden dabei winkelvariable Rahmenstrukturen aus, mittels derer auf einfache Weise eine Neigungsverstellung durchgeführt werden kann.

Gemäß einer ersten Ausführungsform wird die Neigungsverstellung dadurch realisiert, dass die obere Strebe mit einer Schwenklagerungen an dem Pfosten gelagert ist, und dass das Befestigungsmittel, das die zweiten freien Enden der vorderen und hinteren Strebe verbindet, über eine Führung mit dem Pfosten verbunden ist. Bei einem Schwenken der oberen Strebe bezüglich der Schwenklagerung führt das Befestigungsmittel eine durch die Führung vorgegebene, zwangsgeführte Bewegung aus.

Gemäß einer zweiten Ausführungsform wird die Neigungsverstellung dadurch realisiert, dass das Befestigungsmittel, das die zweiten freien Enden der vorderen und hinteren Strebe verbinden, mit einer Schwenklagerung an dem Pfosten gelagert ist. Die obere Strebe ist über eine Führung mit dem Pfosten verbunden, so dass bei einem Schwenken der vorderen und hinteren Strebe bezüglich der Schwenklagerung die obere Strebe eine durch die Führung vorgegebene, zwangsgeführte Bewegung ausführt.

Bei einer mehrreihigen Pfostenanordnung werden zum Einbringen der Solarmodule in die Arbeitsfläche die Pfosten wenigstens einer Reihe nach oben verlängert oder ausgefahren.

Prinzipiell können die Pfosten aller Reihen simultan ausgefahren oder verlängert werden, um so die Solarmodule aus dem Bereich der Montagefläche in die Arbeitsfläche zu überführen.

Alternativ können die Pfosten einer Reihe unverändert bleiben und nur die Pfosten der wenigstens einen weiteren Reihe ausgefahren oder verlängert werden. Damit führen die Solarmodule bei der Überführung von dem Bereich der Montage in die Arbeitsfläche eine Schwenkbewegung aus, wobei hierzu die Solarmodule oder zugeordnete mechanische Komponenten gelenkig an den oberen Pfosten der ersten Reihe gelagert sind.

Das Ausfahren der Pfosten kann beispielsweise durch Teleskopmechanismen realisiert sein. Die Verlängerung von Pfosten kann beispielsweise dadurch realisiert werden, dass Verlängerungsstücke in die Pfosten nachträglich eingebaut werden. Diese Verlängerungsstücke können von gleichartigen Profilen wie die Profile der Pfosten selbst, oder auch von kostengünstigeren, einfacheren Zwischenstücken gebildet sein.

Die Erfindung wird im Folgenden anhand der Zeichnungen erläutert. Es zeigen:
- Figur 1:: Schematische Darstellung eines Ausschnitts eines ersten Ausführungsbeispiels der erfindungsgemäßen Solaranlage.
- Figur 2:: Darstellung eines Pfostens mit einem winkelvariablen Rahmen und darauf gelagerten Solarmodulen für die Solaranlage gemäß Figur 1
a) Seitenansicht mit der Oberseite des Rahmens in einer Montagefläche
b) Seitenansicht mit den Solarmodulen in einer Arbeitsfläche
c) perspektivische Darstellung
- Figur 3:: Variante der Ausführungsform gemäß Figur 2
- Figur 4:: Zweites Ausführungsbeispiel für eine Solaranlage mit einer zweireihigen Pfostenanordnung
a) mit Solarmodulen im Bereich der Montagefläche
b) mit Solarmodulen im Bereich der Arbeitsfläche

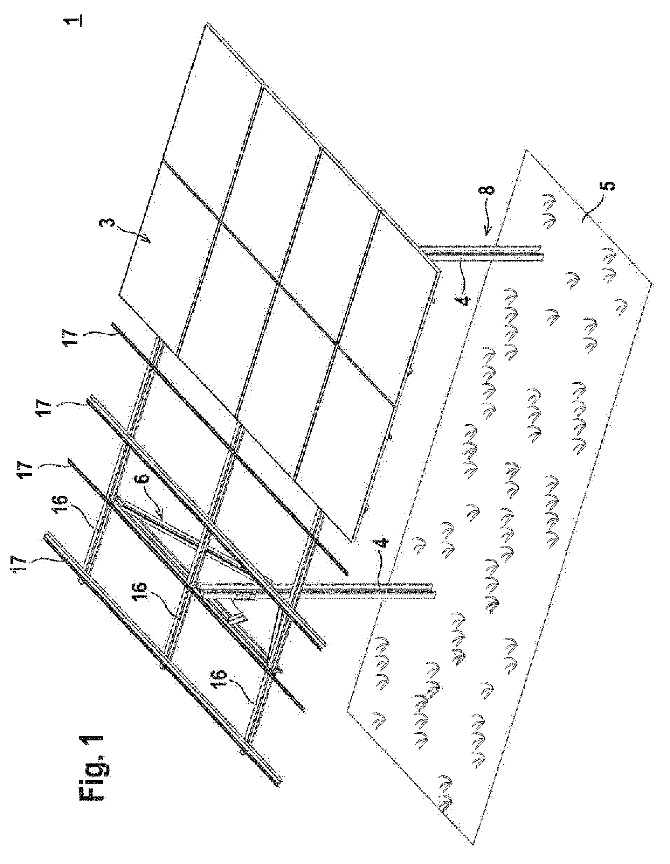

Figur 1 zeigt schematisch einen Ausschnitt eines Ausführungsbeispiels der erfindungsgemäßen Solaranlage 1 mit einer Tragkonstruktion 2 für Solarmodule 3. Die Tragkonstruktion 2 mit den Solarmodulen 3 bildet eine Freilandanlage. Die Tragkonstruktion 2 weist eine einreihige Pfostenanordnung auf, das heißt sie umfasst eine längs einer Geraden angeordnete Reihe von Pfosten 4, die mit in vertikaler Richtung verlaufenden Längsachsen in einem Untergrund 5, das heißt in dem Erdreich verankert sind. Vorteilhaft sind die einzelnen Pfosten 4 äquidistant angeordnet. Die einzelnen Pfosten 4 sind identisch ausgebildet.

An jedem Pfosten 4 ist ein winkelvariabler, das heißt neigungsverstellbarer Rahmen 6 gelagert, wobei die Rahmen 6 jeweils identisch ausgebildet sind. Der Rahmen 6 umfasst eine obere Strebe 7a, eine vordere Strebe 7b und eine hintere Strebe 7c. Die obere Strebe 7a ist in ihrem zentralen Bereich am oberen Ende des Pfostens 4 gelagert. An den beidseits dieser Lagerung liegenden Randbereichen der oberen Strebe 7a sind an deren Unterseite die vordere Strebe 7b und die hintere Strebe 7c gelagert. Die vordere Strebe 7b und hintere Strebe 7c laufen in einem stumpfen Winkel aufeinander zu. Die freien Enden der vorderen und hinteren Strebe 7b, 7c sind an einer Winkellasche 8 befestigt. Diese Winkellasche 8 ist mit einem Bolzen 9, der eine Schwenklagerung ausgebildet, am Pfosten 4 gelagert.

An der Unterseite der oberen Strebe 7a ist ein Führungselement 10 befestigt, dessen unterer Rand eine bogenförmig gekrümmte Kontur aufweist. Dieses Führungselement 10 bildet zusammen mit einem am Pfosten 4 befestigten Sicherungselement 11 eine Führung für die obere Strebe 7a. Dabei weist das Sicherungselement 11 eine Auflagefläche auf, auf welcher der untere Rand des Führungselements 10 aufliegt.

Zur Neigungsverstellung wird der Rahmen 6 bezüglich der Schwenklagerung geschwenkt. Bei der Schwenkbewegung wird der untere Rand des Führungselements 10 entlang des Sicherungselements 11 geführt. Die Schwenkbewegung kann durch nicht darstellte Endanschläge begrenzt sein.

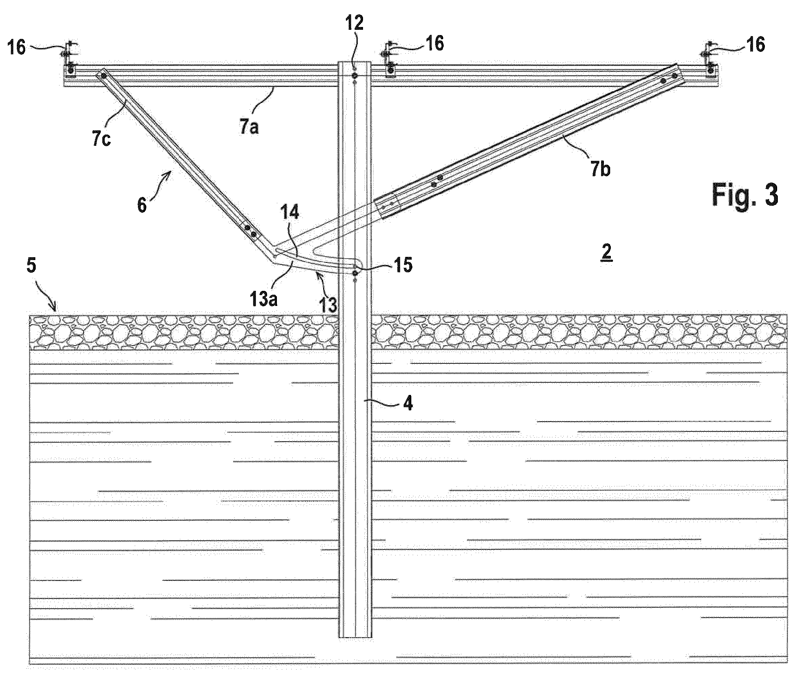

Figur 3 zeigt eine Variante der Neigungsverstellung des Rahmens 6 am Pfosten 4. In diesem Fall ist die obere Strebe 7a mit einem eine Schwenklagerung bildenden Bolzen 12 am Pfosten 4 gelagert. Die aufeinander im stumpfen Winkel aufeinander zulaufenden freien Enden sind an einem Verbindungselement 13 befestigt, von dem seitlich eine Kulisse 13a mit einem Langloch 14 hervorsteht. In diesem Langloch 14 ist zur Ausbildung einer Führung ein am Pfosten 4 befestigter Führungsbolzen 15 befestigt.

Zur Neigungsverstellung wird in diesem Fall der Rahmen 6 bezüglich der Schwenklagerung im Bereich der oberen Strebe 7a verschwenkt. Bei der Schwenkbewegung wird der Führungsbolzen 15 im Langloch 14 der Kulisse 13a geführt.

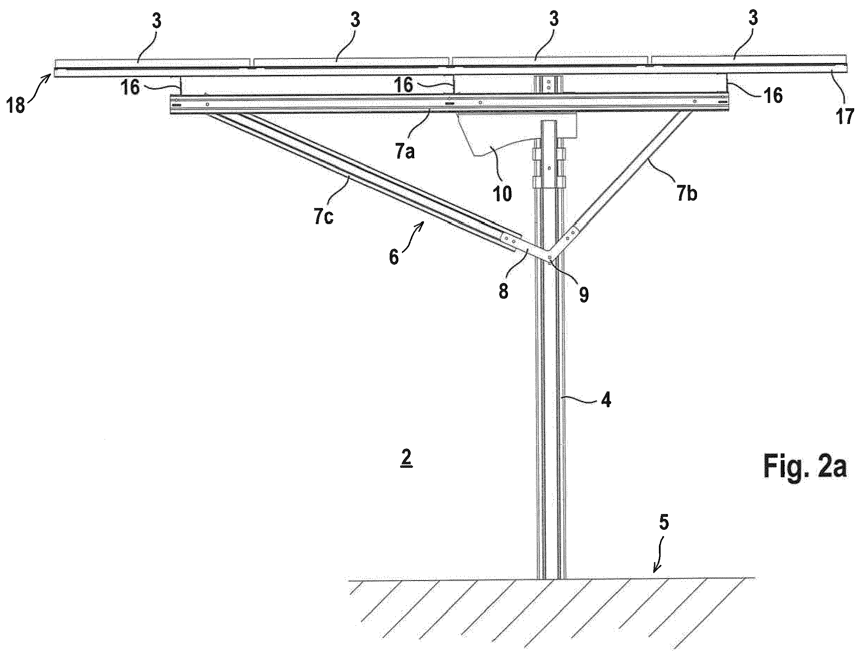

Bei der Tragkonstruktion 2 der Ausführungsform der Figuren 2a - 2c (wie auch bei der Ausführungsform gemäß Figur 3) sind auf den Oberseiten der oberen Streben 7a der einzelnen an den Pfosten 4 gelagerten Rahmen 6 Längsträger 16 gelagert, deren Längsachsen in Richtung der Pfostenreihe verlaufen. Auf den Längsträgern 16 sind Modulträger 17 angeordnet, deren Längsachsen jeweils im rechten Winkel zu den Längsachsen der Längsträger 16 verlaufen. Auf den Modulträgern 17 sind Modultische 18 mit den Solarmodulen 3 gelagert.

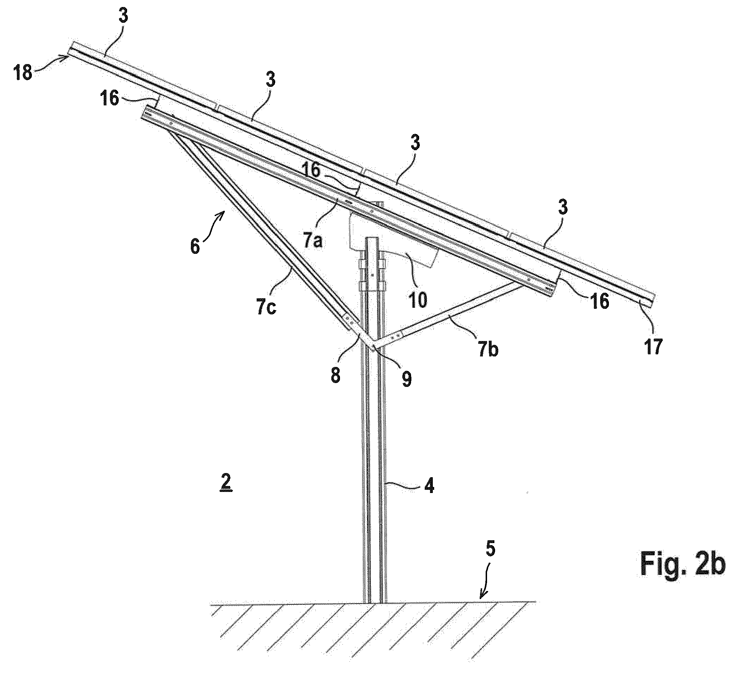

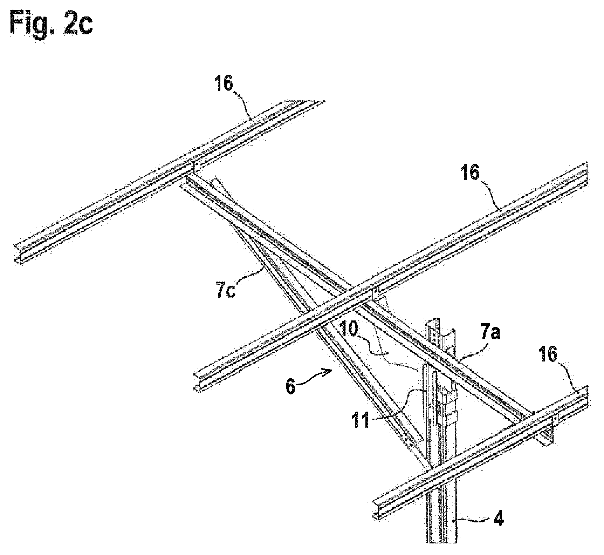

Erfindungsgemäß werden zur Montage von Komponenten der Solaranlage 1, insbesondere der Solarmodule 3, die Rahmen 6 an allen Pfosten 4 so geschwenkt, dass die oberen Streben 7a der Rahmen 6 horizontal ausgerichtet sind und so eine Montagefläche bilden (Figur 2). Diese Montagefläche verläuft in einer ergonomischen Arbeitshöhe oberhalb des Erdreichs, so dass eine Bedienperson auf dem Erdreich stehend und damit ohne Hilfsmittel wie Podeste oder Hebebühnen Zugang zu dieser Montagefläche hat und Montagearbeiten durchführen kann.

In einem ersten Montageschritt werden die Längsträger 16 und Modulträger 17 als vorgefertigte Einheiten auf den Oberseiten der Streben 7a, 7b, 7c befestigt.

In einem zweiten Montageschritt werden die Modultische 18 auf den Modulträgern 17 befestigt und dann in einem weiteren Montageschritt die Solarmodule 3 an den Modultischen 18 befestigt.

In einem abschließenden Verfahrensschritt werden den Solarmodulen 3 zugeordnete mechanische und elektrische Komponenten wie elektrische Anschlusselemente montiert.

Nachdem die Montagearbeiten abgeschlossen sind, werden die Solarmodule 3 als an der Tragkonstruktion 2 fertig montierte Einheit durch simultanes Schwenken der Rahmen 6 an den Pfosten 4 in die in Figur 2b dargestellte Arbeitsposition gebracht, in der die Solarmodule 3 in einer zur Montagefläche geneigten Arbeitsfläche liegen. Damit ist die Solaranlage 1 betriebsbereit.

Das oben genannte Verfahren kann dahingehend modifiziert sein, dass die Längsträger 16 und gegebenenfalls auch die Modulträger 17 vorab auf dem Rahmen 6 gelagert sind, so dass im Bereich der horizontalen Montagefläche nur die Modultische 18 mit den Solarmodulen 3 und den zugeordneten Komponenten montiert werden müssen.

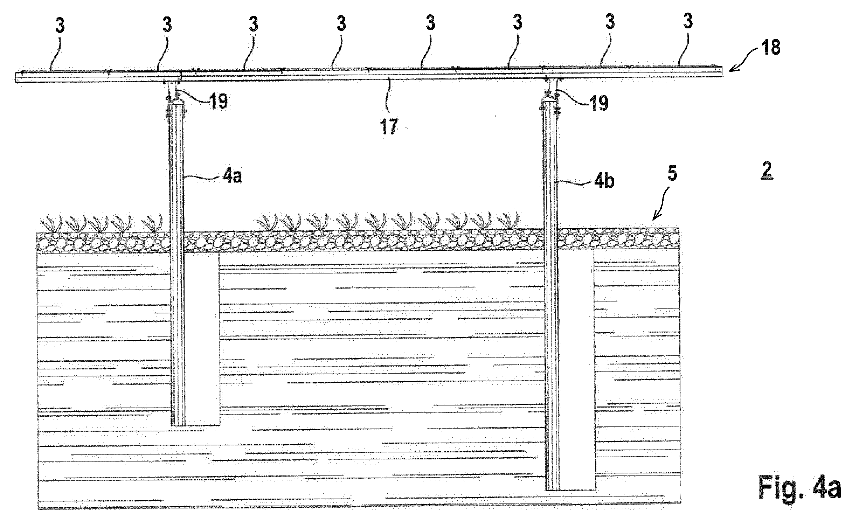

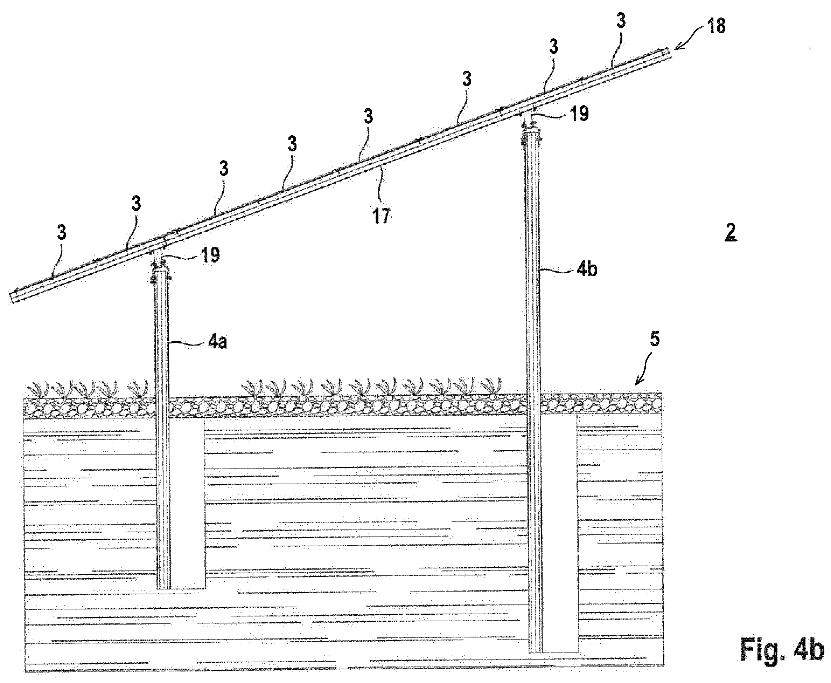

Die Figuren 4a und 4b zeigen eine Ausführungsform einer Tragkonstruktion 2 mit einer zweireihigen Pfostenanordnung. Dabei sind bei der ersten Pfostenanordnung in einer ersten Reihe angeordnete erste Pfosten 4a vorgesehen. Weiterhin sind zweite Pfosten 4b vorgesehen, die eine parallel zur ersten Reihe verlaufende zweite Reihe bilden.

Auf den oberen Enden der Pfosten 4 sind über Gelenklagerungen 19 Modulträger 17 gelagert, auf welchen die Modultische 18 mit den Solarmodulen 3 befestigt sind.

Zunächst sind die Pfosten 4a, 4b derartig angeordnet, dass die Modulträger 17 in einer die Montagefläche bildenden horizontalen Ebene liegen (Figur 4a). Im Bereich dieser Montagefläche werden entsprechend der Ausführungsform der Figuren 2a bis 2c die Montagearbeiten zur Montage der Solarmodule 3 durchgeführt.

Im vorliegenden Fall werden hierzu die Modultische 18 mit den Solarmodulen 3 auf den Modulträgern 17 montiert. Anschließend werden die den Solarmodulen 3 zugeordneten mechanischen und elektrischen Komponenten montiert.

Anschließend werden die Pfosten 4b der zweiten Reihe nach oben ausgefahren. Dadurch werden die Solarmodule 3 aus dem Bereich der Montagefläche in die Arbeitsfläche geschwenkt, wie in Figur 4b dargestellt. Damit ist die Solaranlage 1 betriebsbereit.

Zum Ausfahren der Pfosten 4b können diese Teleskopeinrichtungen aufweisen. Alternativ können die Pfosten 4b durch Einsetzen von Zwischenstücken verlängert werden.

### Bezugszeichenliste

- (1): Solaranlage
- (2): Tragkonstruktion
- (3): Solarmodul
- (4): Pfosten
- (4a, 4b): Pfosten
- (5): Untergrund
- (6): Rahmen
- (7a): obere Strebe
- (7b): vordere Strebe
- (7c): hintere Strebe
- (8): Winkellasche
- (9): Bolzen
- (10): Führungselement
- (11): S icherungselement
- (12): Bolzen
- (13): Verbindungselement
- (13a): Kulisse
- (14): Langloch
- (15): Führungsbolzen
- (16): Längsträger
- (17): Modulträger
- (18): Modultisch
- (19): Gelenklagerung

## Patentansprüche

1. Verfahren zur Montage von Solarmodulen (3) an einer Tragkonstruktion (2), wobei die Tragkonstruktion (2) eine ein- oder mehrreihige Anordnung von Pfosten (4) aufweist,
umfassend folgende Verfahrensschritte:
• Einbringen der Pfosten (4) in ein Erdreich, wobei die oberen Enden der Pfosten (4) oder dort gelagerte Rahmen (6) eine Montagefläche ausbilden
• darauffolgend Montage der Solarmodule (3) im Bereich der Montagefläche, so dass die Solarmodule (3) mit den Pfosten (4) der Tragkonstruktion (2) verbunden sind
• darauffolgend Einbringen der an den Pfosten (4) montierten Solarmodule (3) in eine von der Montagefläche verschiedene Arbeitsfläche.

2. Verfahren nach Anspruch 1, **dadurch gekennzeichnet, dass** die Montagefläche in einer horizontalen Ebene verläuft.

3. Verfahren nach einem der Ansprüche 1 oder 2, **dadurch gekennzeichnet, dass** die Montagefläche in einer ergonomischen Arbeitshöhe oberhalb der Oberfläche des Erdreichs verläuft.

4. Verfahren nach einem der Ansprüche 1 bis 3, **dadurch gekennzeichnet, dass** die Arbeitsfläche gegenüber der Montagefläche geneigt ist.

5. Verfahren nach einem der Ansprüche 1 bis 4, **dadurch gekennzeichnet, dass** im Bereich der Montagefläche eine Tischstruktur mit den Pfosten (4) verbunden wird, wobei auf die Tischstruktur die Solarmodule (3) montiert werden.

6. Verfahren nach einem der Ansprüche 1 bis 5, **dadurch gekennzeichnet, dass** zusätzlich zu den Solarmodulen (3) diesen zugeordnete mechanische oder elektrische Komponenten montiert werden.

7. Verfahren nach einem der Ansprüche 1 bis 6, **dadurch gekennzeichnet, dass** die Tragkonstruktion (2) entlang der Reihen der Pfosten (4) verlaufende Längsträger (16) und quer hierzu verlaufende Modulträger (17) aufweist.

8. Verfahren nach Anspruch 7, **dadurch gekennzeichnet, dass** die Längsträger (16) und die Modulträger (17) die Montagefläche definieren.

9. Verfahren nach Anspruch 7, **dadurch gekennzeichnet, dass** die Modulträger (17) mit oder ohne den Längsträgern (16) in der Montagefläche montiert werden.

10. Verfahren nach einem der Ansprüche 1 bis 9, **dadurch gekennzeichnet, dass** die Überführung der Solarmodule (3) aus dem Bereich der Montagefläche in die Arbeitsfläche mechanisch oder mittels eines elektrischen, hydraulischen oder pneumatischen Stellsystems erfolgt.

11. Verfahren nach Anspruch 10, **dadurch gekennzeichnet, dass** bei einer einreihigen Pfostenanordnung an jedem Pfosten (4) ein Rahmen (6) gelagert ist, der in seiner Neigung am Pfosten (4) einstellbar ist.

12. Verfahren nach Anspruch 11, **dadurch gekennzeichnet, dass** jeder Rahmen (6) eine obere Strebe (7a) aufweist, wobei die Oberseiten der oberen Streben (7a) in einer Ebene verlaufen, wobei parallel zu dieser Ebene die Ebene der montierten Solarmodule (3) verläuft.

13. Verfahren nach Anspruch 12, **dadurch gekennzeichnet, dass** auf den Oberseiten der oberen Streben (7a) die Längsträger (16) und Modulträger (17) montiert sind oder werden.

14. Verfahren nach einem der Ansprüche 11 bis 13, **dadurch gekennzeichnet, dass** jeder Rahmen (6) eine vordere und hintere Strebe (7b, 7c) aufweist, wobei die vordere und hintere Strebe (7b, 7c) mit einem längsseitigen Ende an der Unterseite der oberen Strebe (7a) gelagert sind, wobei zwischen diesen Lagerungen der Pfosten (4) verläuft, und dass die zweiten längsseitigen Enden der vorderen und hinteren Strebe (7b, 7c) durch ein Befestigungsmittel aneinander befestigt und am Pfosten (4) gelagert sind.

15. Verfahren nach Anspruch 14, **dadurch gekennzeichnet, dass** die obere Strebe (7a) mit einer Schwenklagerung an dem Pfosten (4) gelagert ist, und dass das Befestigungsmittel, das die zweiten freien Enden der vorderen und hinteren Strebe (7b, 7c) verbindet, über eine Führung mit dem Pfosten (4) verbunden ist, so dass bei einem Schwenken der oberen Strebe (7a) bezüglich der Schwenklagerung das Befestigungsmittel eine durch die Führung vorgegebene, zwangsgeführte Bewegung ausführt.

16. Verfahren nach Anspruch 15, **dadurch gekennzeichnet, dass** das Befestigungsmittel, das die zweiten freien Enden der vorderen und hinteren Strebe (7b, 7c) verbinden, mit einer Schwenklagerung an dem Pfosten (4) gelagert ist, und dass die obere Strebe (7a) über eine Führung mit dem Pfosten (4) verbunden ist, so dass bei einem Schwenken der vorderen und hinteren Strebe (7b, 7c) bezüglich der Schwenklagerung die obere Strebe (7a) eine durch die Führung vorgegebene, zwangsgeführte Bewegung ausführt.

17. Verfahren nach einem der Ansprüche 1 bis 10, **dadurch gekennzeichnet, dass** bei einer mehrreihigen Pfostenanordnung zum Einbringen der Solarmodule (3) in die Arbeitsfläche die Pfosten (4) wenigstens einer Reihe nach oben verlängert oder ausgefahren werden.
